(19) Europäisches Patentamt
European Patent Office
Office européen des brevets

(11) Numéro de publication: **0 415 817 A1**

# (12) DEMANDE DE BREVET EUROPEEN

(21) Numéro de dépôt: **90402312.4**

(22) Date de dépôt: **20.08.90**

(51) Int. Cl.5: **C08F 220/34**, C09K 19/38

(30) Priorité: **29.08.89 FR 8911327**

(43) Date de publication de la demande: **06.03.91 Bulletin 91/10**

(84) Etats contractants désignés: **CH DE FR GB LI NL**

(71) Demandeur: **THOMSON-CSF**
**51, Esplanade du Général de Gaulle**
**F-92800 Puteaux(FR)**

(72) Inventeur: **Le Barny, Pierre**
**THOMSON-CSF, SCPI, Cédex 67**
**F-92045 Paris la Défense(FR)**
Inventeur: **Broussoux, Dominique**
**THOMSON-CSF, SCPI, Cédex 67**
**F-92045 Paris la Défense(FR)**

(74) Mandataire: **Guérin, Michel et al**
**THOMSON-CSF SCPI**
**F-92045 PARIS LA DEFENSE CEDEX 67(FR)**

## (54) Copolymères amorphes pour applications en optique non linéaire.

(57) L'invention concerne un copolymère amorphe pour applications en optique non linéaire obtenu en copolymérisant un méthacrylate de méthyle avec un monomère portant l'entité génératrice d'effets non linéaires du second ordre, ce monomère colorant étant un méthacrylate, un acrylate ou un chloroacrylate.

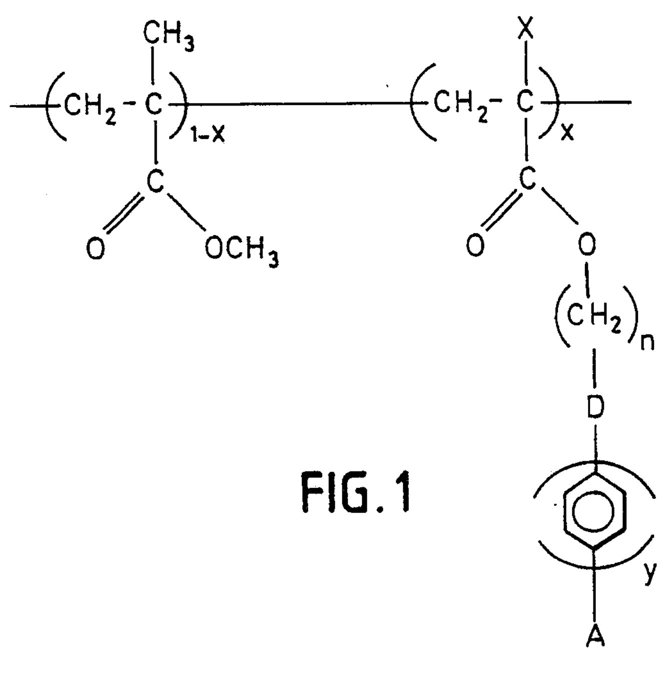

FIG.1

EP 0 415 817 A1

Xerox Copy Centre

# COPOLYMERES AMORPHES POUR APPLICATIONS EN OPTIQUE NON LINEAIRE

La présente invention concerne des copolymères ayant leur maximum d'absorption situé en dessous de 400 nm et utilisables en optique non linéaire. Plus précisément, elle concerne de nouvelles familles de polymères amorphes possédant dans leurs chaînes latérales des groupements chromophores qui orientés par un champ électrique continu à une température voisine de la température de transition vitreuse donnent naissance à des effets non linéaires du second ordre, en optique. Ces effets peuvent être mis à profit dans la réalisation de composants pour optique intégrée tels qu'un doubleur de fréquence opérant avec des longueurs d'onde comprises entre 0,8 et 2 $\mu$m, ou un modulateur électrooptique utilisant une onde électromagnétique dont la longueur d'onde peut être comprise entre 0,6 et 2 $\mu$m.

Il semble dès à présent probable que les télécommunications du futur et les nouvelles générations de systèmes de traitement de l'information utiliseront, dans une large mesure, des solutions "tout optique". Afin de rendre possible un tel développement, la réalisation de systèmes et de composants passifs, optiquement actifs, optoélectroniques et opto-optiques est nécessaire.

Actuellement la majorité des systèmes électrooptiques est fabriquée à partir de niobate de lithium ou de matériaux semiconducteurs.

Cependant, il est maintenant prouvé qu'un grand nombre de matériaux organiques possèdent des non linéarités en optique beaucoup plus grandes que les matériaux inorganiques. Par ailleurs, ils ont des temps de réponse très courts car les effets non linéaires auxquels ils donnent naissance sont d'origine purement électronique. De plus, ils présentent un seuil de dommage optique plus élevé que les matériaux inorganiques. Enfin, il est possible de faire varier très facilement la structure chimique des composés organiques, ce qui permet d'ajuster en particulier la transparence et la valeur de l'hyperpolarisabilité de ces molécules, ces deux paramètres variant en sens inverse.

Las matériaux non centrosymmétriques obtenus avec des molécules organiques, donnant naissance à des effets non linéaires du second ordre sont :
- des monocristaux
- des films de Langmuir-Blodgett
- des polymères.

Parmi ces trois alternatives, l'emploi des polymères semble le plus prometteur. En effet, les polymères sont relativement faciles à mettre en oeuvre, ce qui conduit à des coûts faibles. Ils peuvent être appliqués sur de grandes surfaces. De plus, ils sont compatibles avec des substrats inorganiques comme les semiconducteurs. Cet ensemble de propriétés en font un matériau de choix pour l'optique intégrée.

Jusqu'à présent, les matériaux polymères qui ont été étudiés sont :
- soit une solution solide de la molécule non linéaire dans un polymère. Ce polymère étant soit un polymère amorphe (comme le polyméthacrylate de méthyle PMMA) soit un polymère cristal-liquide à chaînes latérales ;
- soit un polymère ferroélectrique comme les copolymères de difluorure de vinylidène - trifluorure de vinylidène [P ($VF_2$ - $VF_3$)] ou le copolymère alterné dicyanure de vinylidène - acétate de vinyle [P-(VDCN/VAc)] ;
- soit un copolymère amorphe ou cristal liquide, tel que celui décrit dans le brevet de la demanderesse FR 2 597 109 dans lequel l'entité génératrice du second harmonique est directement liée au squelette du polymère ce qui permet d'augmenter la teneur en entité non linéaire.

Jusqu'à présent, dans le domaine des polymères pour les effets non linéaires du second ordre, un effort important a été fait pour obtenir des matériaux présentant une valeur élevée de coefficient de non linéarité $d_{33}$ ce qui a conduit à choisir des structures chimique de l'entité génératrice de second harmonique possédant une grande valeur d'hyperpolarisabilité $\beta$. Ce choix est fait aux dépens de la transparence du matériau dans le domaine des longueurs d'onde du visible et de ce fait limite l'utilisation de ces matériaux aux longueurs d'onde supérieures à 0,8 $\mu$m.

Afin de pallier ces inconvénients, l'invention propose un ensemble de copolymères amorphes obtenus en copolymérisant un méthacrylate de méthyle avec un monomère portant l'entité génératrice des effets non linéaires du second ordre (que l'on peut appeler "monomère colorant" pour simplifier), chaque copolymère présentant simultanément les propriétés suivantes :
- une structure chimique choisie de manière à ce que le polymère ait un maximum d'absorption en dessous de 400 nm, permettant de l'utiliser jusqu'à 530 nm ;
- un copolymère après polarisation sous champ électrique continu présentant une susceptibilité du second ordre suffisante pour envisager les applications ($d_{33}$ > 5pm/V) ;
- un copolymère ayant une température de transition vitreuse supérieure 75° C afin de limiter les

phénomènes de relaxation ;
- un copolymère filmogène et des films obtenus ayant de très bonnes qualités optiques (pas de diffusion et bonne transparence pour les longueurs d'onde utilisées).

La structure moléculaire des copolymères selon une première variante de l'invention est celle représentée à la figure 1, où D est un groupe donneur d'électrons, et A un groupe accepteur d'électrons, les autres paramètres répondant aux conditions suivantes :

X = $CH_3$, H ou Cl
n = 0 ou $2 \leqq n \leqq 15$
y = 1 ou 2
$0 < x < 1$ (x : fraction molaire du monomère colorant).

Le groupe donneur d'électrons D étant choisi entre :

$$-O- \ , \ -S- \ , \ >N-C_pH_{2p+1} \text{(avec } 0 \leqslant p \leqslant 3\text{)},$$

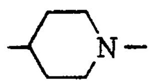 ou 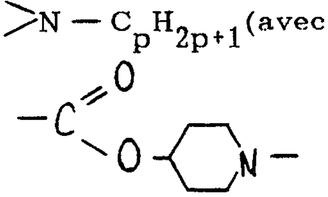

Le groupe accepteur d'électrons A étant choisi entre

$-NO_2$ et 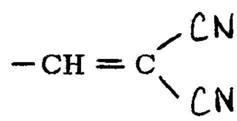

La structure moléculaire des copolymères selon une seconde variante de l'invention est celle représentée à la figure 2, où :

X = $CH_3$, H ou Cl
$0 < x < 1$ (x : fraction molaire du monomère colorant)
$2 \leqq n \leqq 15$

L'invention sera mieux comprise et d'autres avantages apparaîtront à la lecture de la description qui va suivre, donnée à titre non limitatif, et grâce aux dessins annexés parmi lesquels :

- la figure 1 représente la structure moléculaire de copolymères selon une première variante de l'invention ;
- la figure 2 représente la structure moléculaire de copolymères selon une seconde variante de l'invention ;
- la figure 3 représente la formule chimique d'un premier exemple de copolymère selon l'invention ;
- la figure 4 représente un schéma réactionnel de synthèse du monomère colorant du premier exemple de copolymère selon l'invention ;
- la figure 5 représente la formule chimique d'un deuxième exemple de copolymère selon l'invention ;
- la figure 6 représente un schéma réactionnel de synthèse du monomère colorant du deuxième exemple de copolymère selon l'invention ;
- la figure 7 représente la formule chimique d'un troisième exemple de copolymère selon l'invention ;
- la figure 8 représente un schéma réactionnel de synthèse du monomère colorant du troisième exemple de copolymère selon l'invention ;
- la figure 9 représente la formule chimique d'un quatrième exemple de copolymère selon l'invention ;
- la figure 10 représente un schéma réactionnel de synthèse du monomère colorant du quatrième exemple de copolymère selon l'invention ;
- la figure 11 représente la formule chimique d'un cinquième exemple de copolymère selon l'invention ;
- la figure 12 représente la formule chimique d'un sixième exemple de copolymère selon l'invention ;
- la figure 13 représente un schéma réactionnel de synthèse du monomère colorant du sixième exemple de copolymère selon l'invention ;
- la figure 14 représente un schéma réactionnel de synthèse du monomère colorant selon la seconde variante de l'invention.

D'une manière générale, les copolymères selon l'invention sont obtenus par polymérisation radicalaire,

utilisant l'α,α' azobisisobutyronitrile (AIBN) comme amorceur et le diméthylformamide (DMF) comme solvant, à 60° C pendant 24 heures.

Le copolymère est précipité dans l'éthanol, puis lavé à l'éther et enfin séché sous vide.

La teneur en colorant est déterminée par résonance magnétique nucléaire.

On va donner ci-dessous quelques exemples de synthèse de copolymères, selon l'invention.

**EXEMPLE I**

Cet exemple concerne la synthèse du copolymère représenté à la figure 3. Il s'agit donc du copolymère de la première variante de l'invention (représentée à la figure 1) pour lequel : X = $CH_3$, n = 3, y = 2

D est -O-, et A est $-NO_2$

Ce copolymère peut être appelé copolymère de [méthacrylate de méthyle, 4 (méthacryloyloxypropyloxy) 4' nitrobiphényle].

La synthèse du 4 (méthacryloyloxypropyloxy) 4' nitrobiphényle se fait en cinq étapes à partir du 4 hydroxybiphényle selon le schéma réactionnel représenté à la figure 4.

Les trois premières étapes sont décrites avec précision dans l'article de T. LESLIE et al. paru dans Mol. Cryst. Liq. Cryst. (1987), vol. 153, pp. 451 - 477. Le mode opératoire des deux dernières étapes dérive de celui suivi par T. LESLIE et al. pour obtenir le 4 (méthacryloyloxyhexyloxy) 4' nitrobiphényle.

Le 4 (γhydroxypropyloxy) 4' nitrophényle, obtenu à l'issue de la quatrième étape, a un point de fusion de 94,5° C. Le rendement de la quatrième étape est de 78,5 %.

Le 4 (méthacryloyloxypropyloxy) 4' nitrobiphényle a un point de fusion de 90,8 °C. Le rendement de la cinquième étape est de 69 %.

Le 4 benzoyloxy 4' nitrobiphényle, obtenu à l'issue de la deuxième étape, a une longueur d'onde maximum d'absorption de 308 nm avec un coefficient d'extinction molaire de 18400 $l.\ mole^{-1}\ .\ cm^{-1}$ (spectre UV réalisé avec le chloroforme comme solvant).

Le copolymère correspondant est ensuite obtenu par polymérisation radicalaire.

**EXEMPLE II**

Cet exemple concerne la synthèse du copolymère représenté à la figure 5. Il s'agit donc du copolymère de la première variante de l'invention (représentée à la figure 1) pour lequel :

$$X = CH_3,\ n = 3,\ y = 1$$
$$D\ est\ >N - C_pH_{2p+1}\ (avec\ p = 0),$$
$$et\ A\ est\ -NO_2$$

Ce copolymère peut être appelé copolymère de [méthacrylate de méthyle, 4 (N-méthacryloyloxypropylamino) nitrobenzène].

Le monomère colorant est synthétisé en deux étapes à partir du 4 fluoronitrobenzène selon le schéma réactionnel représenté à la figure 6.

. Synthèse du 4 (γhydroxypropylamino) nitrobenzène.

Dans un erlenmeyer de 100 ml, on introduit 5,64 g (0,04 mole) de 4 fluoronitrobenzène, 2,32 g de γ hydroxypropylamine, 4,40 g de carbonate de potassium, 1 goutte d'aliquat 336 et 30 ml de HMPA (hexaméthylphosphortriamide).

On chauffe à 90° C pendant 8 H 30. Le mélange réactionnel est ensuite coulé dans un mélange eau-hexane. Après agitation le produit brut précipite. On sépare le solide par filtration. Le produit brut est recristallisé dans le toluène.

Le rendement de la réaction est de 70,5 %. Le point de fusion du produit obtenu est 73,5° C.

. Synthèse du 4 (N-méthacryloyloxypropylamino) nitrobenzène.

Dans un erlenmeyer de 100 ml, sous agitation magnétique, on dissout 3,7 g de 4 (N $\gamma$ hydroxypropylamino) nitrobenzène dans 30 ml de THF (tétrahydrofuranne) et 3,76 g de triéthylamine. Puis on ajoute, à une température de 0° C, goutte à goutte une solution de 2,36 g de chlorure de méthacryloyle dans 8 ml de THF. On laisse revenir à température ambiante. On agite pendant 5 heures puis on ajoute 0,62 g de chlorure de méthacryloyle et on continue d'agiter à température ambiante pendant 16 heures.

Le milieu réactionnel est coulé dans de l'eau acidifiée par de l'acide chlorhydrique. On extrait à l'éther. Le produit brut (liquide) est purifié par chromotographie sur gel de silice avec comme éluant un mélange toluène - chloroforme 50 -50 (en volumes), suivie d'une recristallisaiton dans un mélange hexane - éthanol 90 - 10 (en volumes).

Le rendement de la réaction est de 72 %. Le point de fusion du produit obtenu est de 61 ° C.

Le copolymère correspondant est ensuite obtenu par polymérisation radicalaire.

**EXEMPLE III**

Cet exemple concerne la synthèse du copolymère représenté à la figure 7. Il s'agit donc du copolymère de la première variante de l'invention (représentée à la figure 1) pour lequel : X = H, n = 0, y = 1

D est

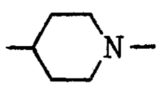

et A est $NO_2$

Ce copolymère peut être appelé copolymère de [méthacrylate de méthyle - 4 (4′ acryloyloxypipéridino) nitrobenzène].

La synthèse du monomère colorant se fait en deux étapes à partir du 4 fluoronitrobenzène commercial, selon le schéma réactionnel de la figure 8.

. Synthèse du 4 (4′ hydroxypipéridino) nitrobenzène.

La synthèse de ce composé est identique à celle du 4 ($\gamma$ hydroxypropylamino) nitrobenzène de l'exemple II.

Le rendement de la réaction est de 91 %. Le point de fusion du produit obtenu est 114,5 ° C.

. Synthèse du 4 (4′ acryloyloxypipéridino) nitrobenzène.

La synthèse de ce composé est identique à celle du 4 (N méthacryloyloxypropylamino) nitrobenzène de l'exemple II.

Le produit brut est purifié par chromotographie sur gel de silice avec comme éluant une mélange toluène -chloroforme 50 - 50 (en volumes), suivie de deux recristallisations dans l'éthanol.

Le rendement de la réaction est de 30 %. Le point de fusion du produit obtenu est 159° C.

Le copolymère correspondant est ensuite obtenu par polymérisation radicalaire.

**EXEMPLE IV**

Cet exemple concerne la synthèse du copolymère représenté à la figure 9. Il s'agit donc du copolymère de la première variante de l'invention (représenté à la figure 1) pour lequel : X = $CH_3$, n = 5, y = 1

D est

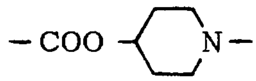

et A est $-NO_2$

Ce copolymère peut être appelé copolymère de [méthacrylate de méthyle - 4 (4′ méthacryloyloxyhexanoyloxypipéridino) nitrobenzène].

La synthèse de monomère colorant se fait en deux étapes à partir du 4 (4′ hydroxypipéridino) nitrobenzène selon le schéma réactionnel de la figure 10.

. Synthèse du 4 (4′ ω bromohexanoyloxypipéridino) nitrobenzène.

La synthèse de ce composé est identique à celle du 4 (N - méthacryloyloxypropylamino) nitrobenzène de l'exemple II.

Le produit brut est purifié par chromatographie sur gel de silice avec le toluène comme éluant, suivie d'une recristallisation dans le cyclohexane.

Le rendement de la réaction est de 20 %. Le point de fusion du produit obtenu est 63,5° C.

. Synthèse du 4 (4′ méthacryloyloxypipéridino) nitrobenzène.

Dans un erlenmeyer de 25 ml, sous agitation magnétique, on dissout 0,66 g de 4 (4′ ω bromohexanoyloxypipéridino) nitrobenzène dans 4,6 ml de HMPA, puis ont ajoute 0,31 g de méthacrylate de lithium. On agite à 50° C pendant 45 heures. Le milieu réactionnel est ensuite coulé dans l'eau. On extrait à l'éther. Le produit brut est purifié par chromotographie sur gel de silice avec le toluène comme éluant, suivie d'une recristallisation dans un mélange hexane -éthanol 50 - 50 (en volumes).

Le rendement de la réaction est de 70 %. Le point de fusion du produit obtenu est 59 ° C.

Le copolymère correspondant est ensuite obtenu par polymérisation radicalaire.

Selon les valeurs de x, on obtient les températures de transition vitreuse Tg suivantes :

x = 0,046 , Tg = 103° C
x = 0,113 , Tg = 100° C
x = 0,2 , Tg = 80° C
x = 0,476 , Tg = 75° C
Pour x = 1 , Tg vaut 50° C

**EXEMPLE V**

Cet exemple concerne la synthèse du copolymère représenté à la figure 11. Il s'agit donc du copolymère de la première variante de l'invention (représenté à la figure 1) pour lequel : X = $CH_3$ , n = 0 , y = 1
D est

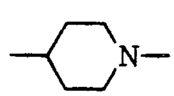 et

A est $-NO_2$

Ce copolymère peut être appelé copolymère de [(méthacrylate de méthyle - 4 (4′ méthacryloyloxypipéridino) nitrobenzène].

La synthèse du monomère colorant est identique à celle du 4 (N - méthacryloyloxypropylamino) nitrobenzène de l'exemple II.

Le produit brut est purifié par recristallisation dans l'éthanol.

Le rendement de la réaction est de 54 % . Le point de fusion du produit obtenu est 105° C.

Le copolymère correspondant est ensuite obtenu par polymérisation radicalaire.

Pour x = 0,27, la température de transition vitreuse Tg vaut 146° C.

**EXEMPLE VI**

Cet exemple concerne la synthèse du copolymère représenté à la figure 12. Il s'agit donc du copolymère de la première variante de l'invention (représenté à la figure 1) pour lequel : $X = CH_3$, $n = 2$, $y = 2$

D est le soufre et A est - $NO_2$

Ce copolymère peut être appelé copolymère de [(méthacrylate de méthyle - 4 (méthacryloyloxyéthylthio) 4′ nitrobiphényle ].

La synthèse du monomère colorant se fait en deux étapes à partir du 4 fluoro 4′ nitrobiphényle selon le schéma réactionnel de la figure 13.

. Synthèse du 4 (hydroxyéthylthio) 4′ nitrobiphényle

- formation du thiolate :

Dans un ballon surmonté d'un réfrigérant et d'une garde de $CaCl_2$, on introduit 100 ml d'éthanol, puis 1,1 g ($4,48 \times 10^{-2}$ mole) de sodium. On place sous agitation thermique jusqu'à disparition du sodium. On ajoute alors 3,74 g ($4,79 \times 10^{-2}$ mole) de mercapto-éthanol. Après agitation pendant 10 mn, on évapore l'éthanol. On obtient un solide blanc;

- formation du biphényle.

On ajoute successivement 20 ml de HMPA et 10 g ($4,65 \times 10^{-2}$ mole) de p-fluoronitrobiphényle et on porte le mélange à 80° C pendant 3 heures. La solution passe progressivement du noir au violet. Elle est ensuite coulée dans 500 ml d'eau glacée : des particules jaunes apparaissent. Après filtration et lavage à l'hexane, on obtient un précipité marron qui est recristallisé dans le méthanol : on obtient 5,02 g (44 % ) de poudre marron clair.

Le point de fusion du produit obtenu est 92° C.

. Synthèse du 4 (méthacryloyloxyéthylthio) 4′ nitrobiphényle.

Dans un erlenmeyer de 50 ml contenant 20 ml de THF et 1 ml de $Et_3N$, on dissout 4,7 g ($1,71 \times 10^{-2}$ mole) de thiol. La solution est refroidie à l'aide d'un mélange eau-glace. Dans une ampule à brome adaptée sur l'erlenmeyer, on introduit goutte à goutte 2,15 g ($2,05 \times 10^{-2}$ mole) de chlorure d'acyle dilué dans 5 ml de THF. Le chlorohydrate précipite peu à peu. On laisse sous agitation pendant 2 h 30.

La solution est alors filtrée dans de l'eau acidulée. L'ester est extrait à l'éther. La phase éthérée est séchée sur $MgSO_4$ et évaporée. Le composé jaune obtenu est purifié sur colonne de silice (120 g de silice et le toluène comme éluant). Après évaporation du slvant et recristallisation dans l'éthanol, on obtient 1,56 g (26,6 % ) de produit jaune. Son point de fusion est 58,5° C.

Le maximum d'absorption est obtenu pour $\lambda = 335,7$ nm (spectre UV fait avec le chloroforme comme solvant) avec un coefficient d'extinction molaire de 33 200 $l.mole^{-1}.cm^{-1}$. La température de transition vitreuse du copolymère est 106° C pour $x = 0,25$.

Le copolymère correspondant est ensuite obtenu par polymérisation radicalaire.

L'utilisation de l'atome de soufre comme groupe donneur d'électrons présente l'avantage d'obtenir un colorant ayant une valeur de $\beta$ du même ordre de grandeur que celle des dérivés nitrés correspondants avec un déplacement vers les basses longueurs d'onde du maximum d'absorption.

**EXEMPLE VII**

Cet exemple concerne la synthèse du copolymère représenté à la figure 2. Il s'agit donc du copolymère de la deuxième variante de l'invention. Il s'agira du cas où $X = CH_3$ et $n = 2$.

Ce copolymère peut être appelé copolymère de [méthacrylate de méthyle, 4 (méthacryloyloxyéthylthio)

4′ nitrostilbène].

Le monomère colorant est synthétisé en trois étapes à partir du fluorobenzaldéhyde selon le schéma réactionnel représenté à la figure 14.

. Synthèse de l'hydroxyéthylthiobenzaldéhyde.

Le thiolate est préparé en dissolvant 3,39 g (0,147 mole) de sodium dans 120 ml d'éthanol absolu et en y ajoutant 11,44 g (0,146 mole) de mercaptoéthanol. On ajoute alors 15,4 g (0,124 mole) de fluorobenzaldéhyde. La solution se colore en jaune. On laisse sous agitation à 80 °C pendant 4 heures. La solution est ensuite coulée dans 800 ml d'eau glacée : il se forme un précipité blanc. Après filtration et lavage à l'hexane, il est recristallisé dans l'éthanol. On obtient 18,11 g (80,1 % ) de cristaux jaune pâle. Le point de fusion du produit obtenu est 67,4 °C.

. Synthèse du 4 (2-hydroxyéthylthio) 4′ nitrostilbène.

Dans un erlenmeyer de 500 ml, on introduit 3 g ($1,64 \times 10^{-2}$ mole) de thiol, puis 3,06 g ($1,68 \times 10^{-2}$ mole) d'acide p-nitrophénylacétique. Le tout est homogénéisé et additionné de 1 ml de pipéridine. L'erlenmeyer est surmonté d'un réfrigérant et porté à 150 °C sous agitation pendant 4 heures. La solution se colore peu à peu en rouge sombre. On coule alors dans de l'eau glacée : un précipité rouge orangé apparaît. Après filtration et lavage à l'hexane, il est recristallisé dans l'éthanol et séché. On obtient 2,55 g (51,4 % ) de granulés rouge orangé. Le point de fusion du produit obtenu est 67,5 °C.

. Synthèse du 4 (méthacryloyloxyéthylthio) 4′ nitrostilbène.

Dans un erlenmeyer de 50 ml contenant 40 ml de THF et 2 ml de $Et_3N$, on dissout 3,49 g ($1,16 \times 10^{-2}$ mole) de thiol. La solution est refroidie à l'aide d'un mélange eau-glace. Dans une ampoule à brome adaptée sur l'erlenmeyer, on introduit goutte à goutte 2,11 g ($2,02 \times 10^{-2}$ mole) de chlorure d'acyle dilué dans 5 ml de THF. Le chlorhydrate précipite peu à peu. On laisse sous agitation pendant 2 h 30.

La solution est alors filtrée dans de l'eau acidulée. L'ester précipite, est filtré sur du verre fritté en ajoutant du méthanol pour faciliter la filtration. Le composé obtenu est purifié sur colonne de silice (102 g de silice ; solvant : le chloroforme) et recristallisé dans l'éthanol. On obtient 2,26 g (49,1 % ) de poudre jaune.

Le point de fusion du produit obtenu est 118 °C.

Le maximum d'absorption est obtenu pour $\lambda$ = 366 nm avec un coefficient d'extinction molaire de 29 900 l. $mole^{-1}$ $cm^{-1}$ (spectre UV réalisé avec le chloroforme comme solvant).

La température de transition vitreuse du copolymère obtenu est 120 °C lorsque x = 0,2.

A partir des exemples ci-dessus, l'homme du métier pourra reproduire sans problème particulier les autres copolymères selon l'invention.

**Revendications**

1. Copolymère amorphe pour applications en optique non linéaire, caractérisé en ce qu'il répond à la formule suivante :

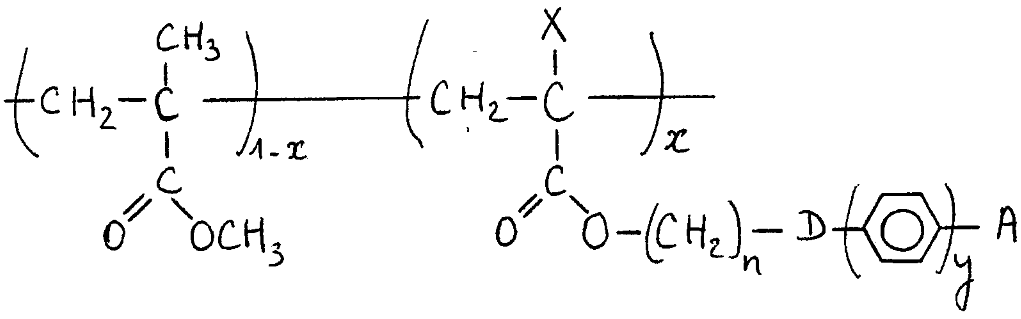

- X étant $CH_3$, H ou Cl
- n = 0 ou $2 \leqq n \leqq 15$
- y = 1 ou 2
-$0 < x < 1$
- D, groupe donneur d'électrons, étant choisi parmi

$$-O- \ , \ -S- \ , \ >N-C_p\,H_{2p+1}$$

avec $0 \leqq p \leqq 3$,

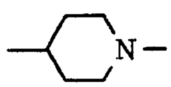 ou $-COO$ 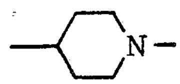

- A, groupe accepteur d'électrons, étant choisi entre $-NO_2$ et $-CH=C(CN)_2$

2. Copolymère selon la revendication 1, caractérisé en ce que : X = $CH_3$ , n = 3, y = 2, D est l'oxygène et A est $-NO_2$.
3. Copolymère selon la revendication 1, caractérisé en ce que : X = $CH_3$, n = 3, y = 1, D est =N- H et A est $-NO_2$.
4. Copolymère selon la revendication 1, caractérisé en ce que : X = H , n = 0, y = 1, D est

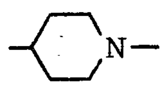

et A est $-NO_2$.
5. Copolymère selon la revendication 1, caractérisé en ce que : X = $CH_3$, n = 5, y = 1, D est

$-COO$ 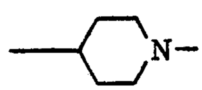

et A est $-NO_2$.
6. Copolymère selon la revendication 1, caractérisé en ce que X = $CH_3$, n = 0, y = 1, D est

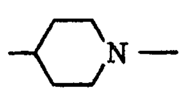

et A est $-NO_2$.
7. Copolymère selon la revendication 1, caractérisé en ce que : X = $CH_3$, n = 2, y = 2, D est le soufre et A est $-NO_2$.
8. Copolymère amorphe pour applications en optique non linéaire, caractérisé en ce qu'il répond à la

formule suivante :

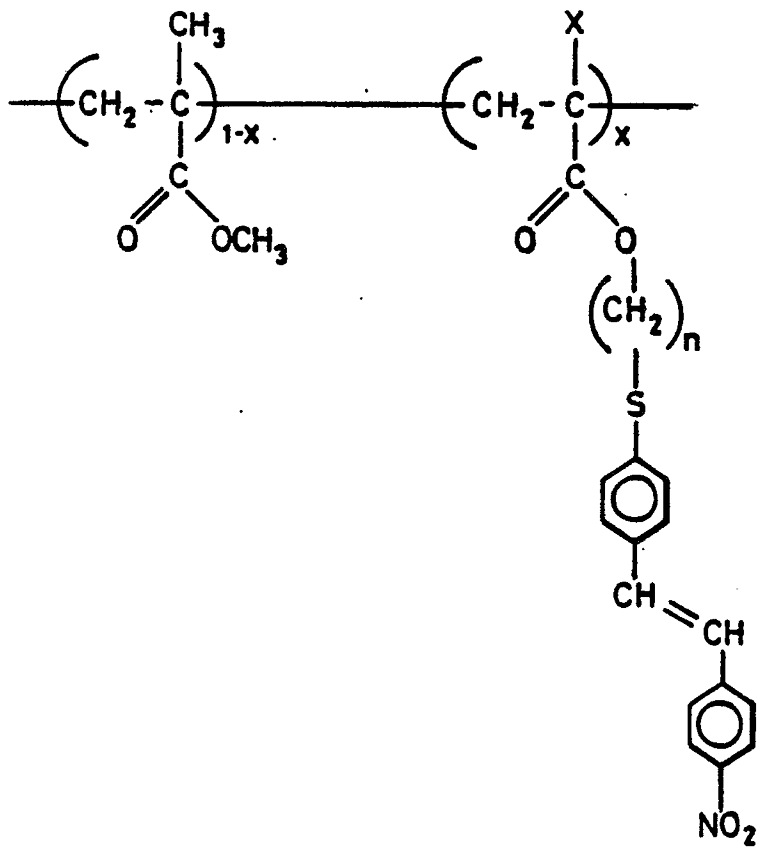

-X étant $CH_3$, H ou Cl
$-2 \leqq n \leqq 15$.

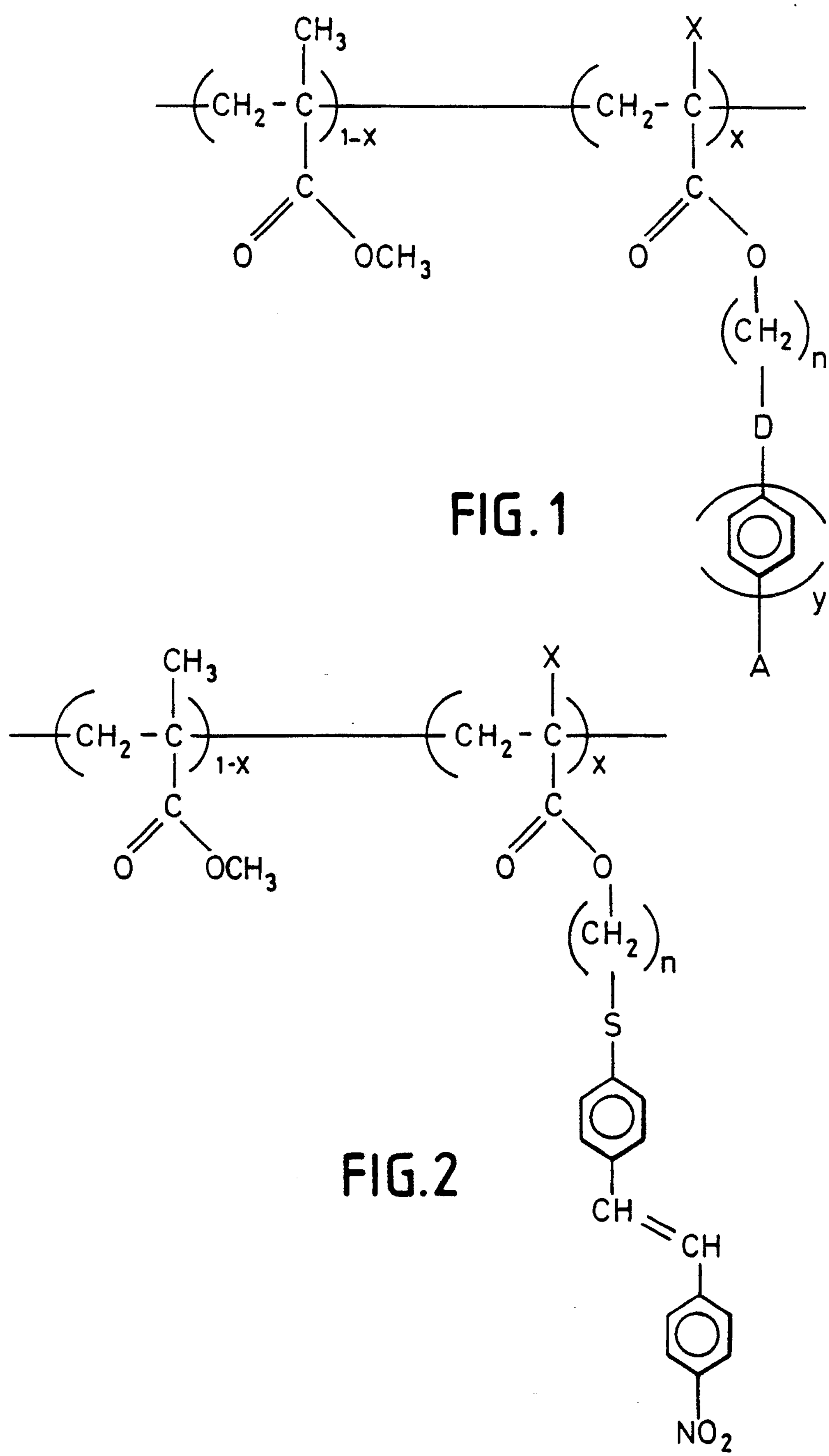

FIG. 1

FIG. 2

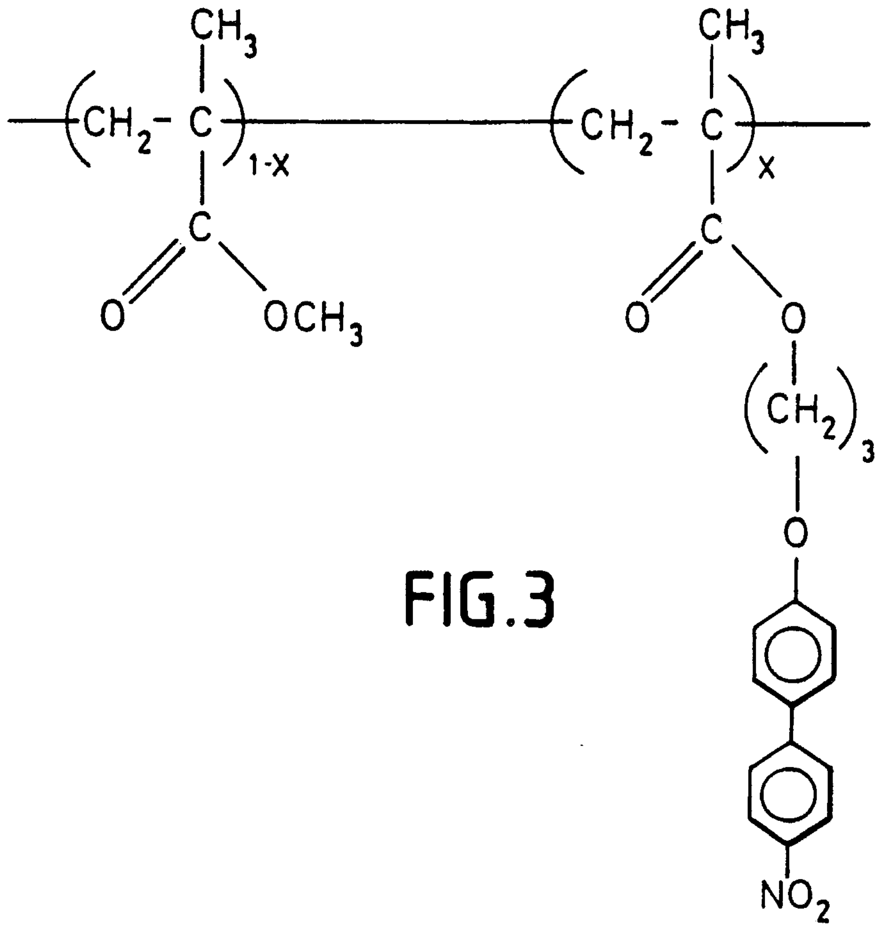

FIG.3

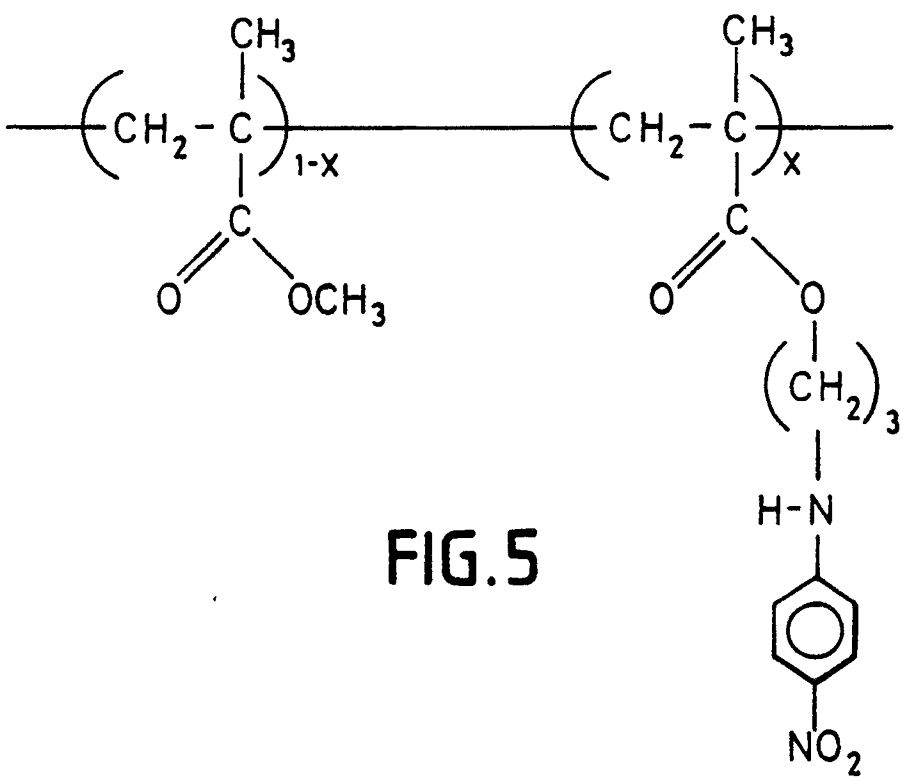

FIG.5

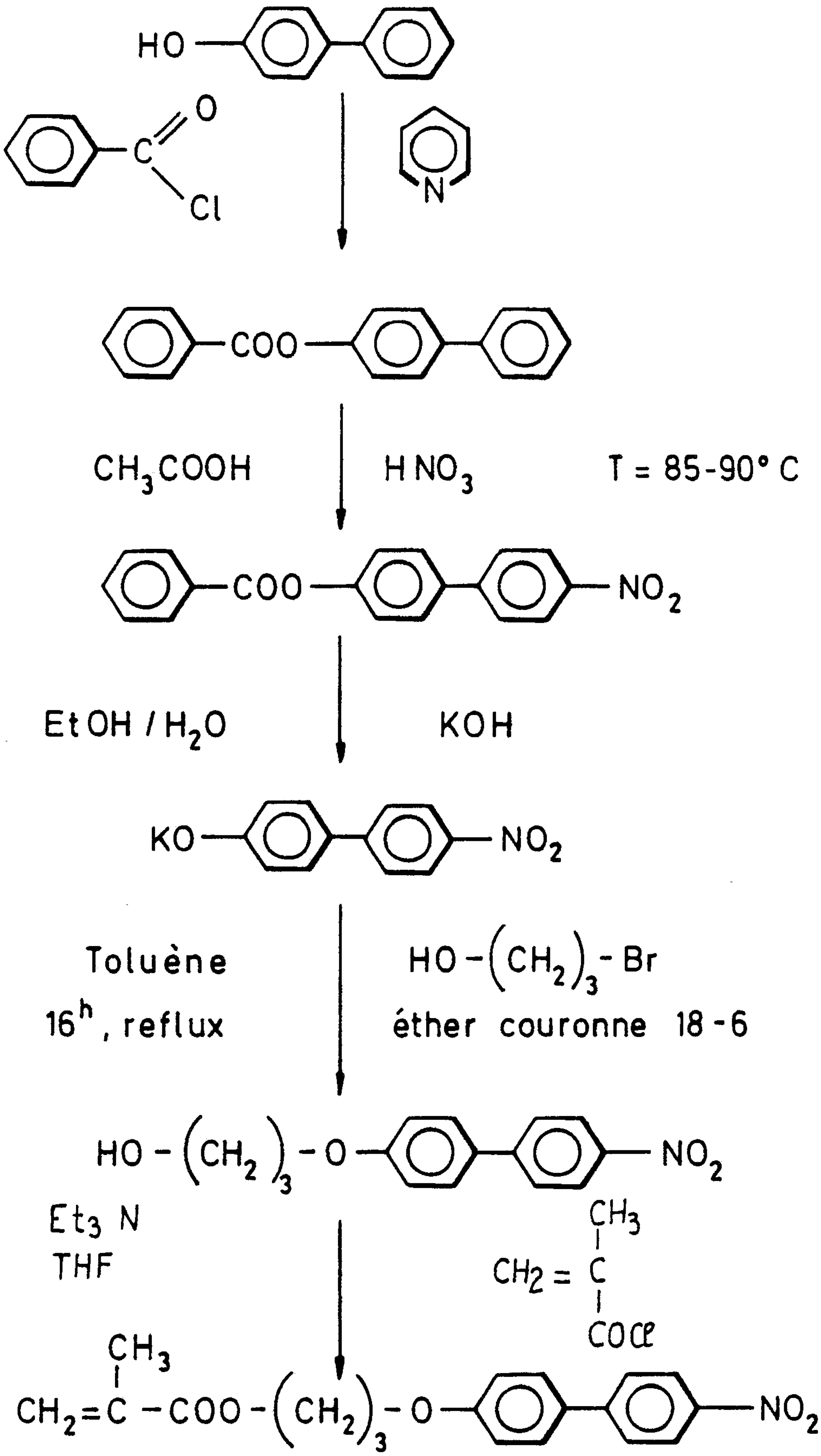
CH3COOH
HNO3
T = 85-90° C
EtOH / H2O
KOH
Toluène
16h, reflux
HO-(CH2)3-Br
éther couronne 18-6
Et3 N
THF

FIG. 4

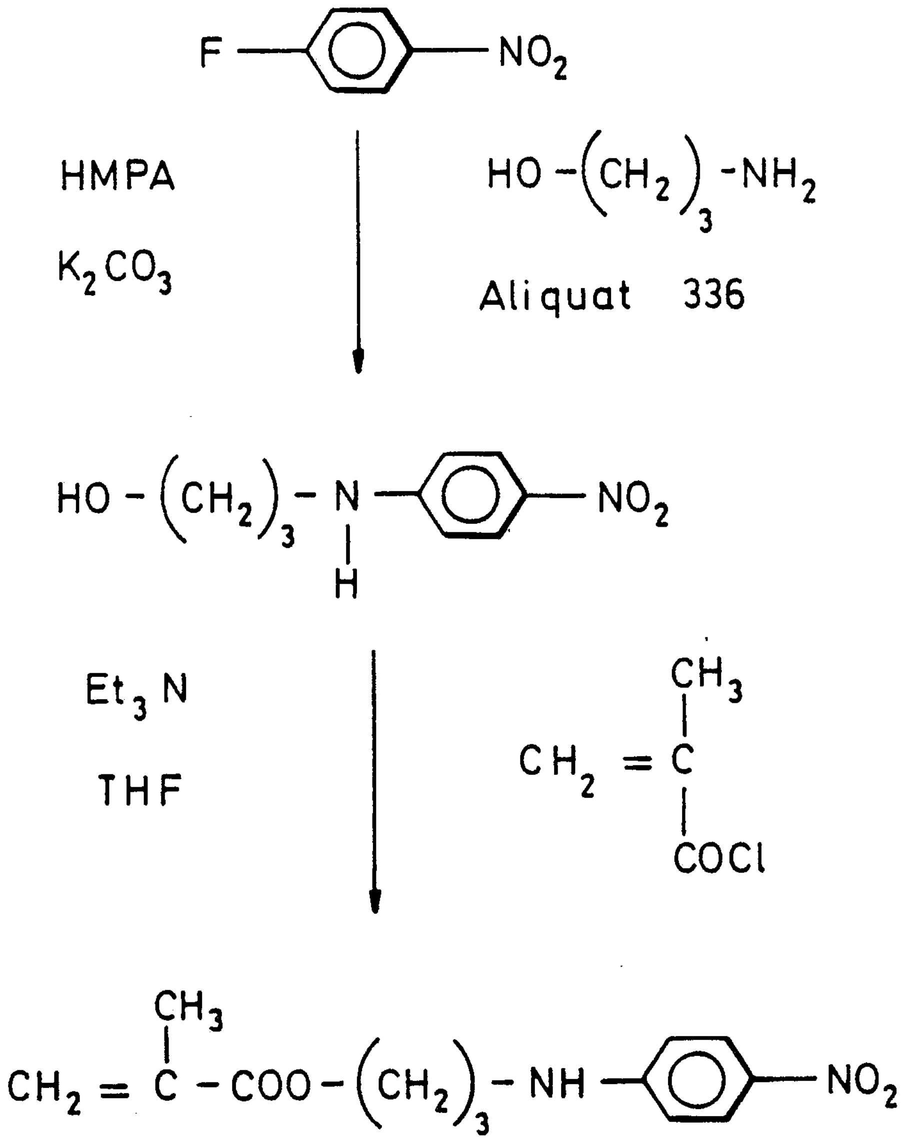


FIG.6

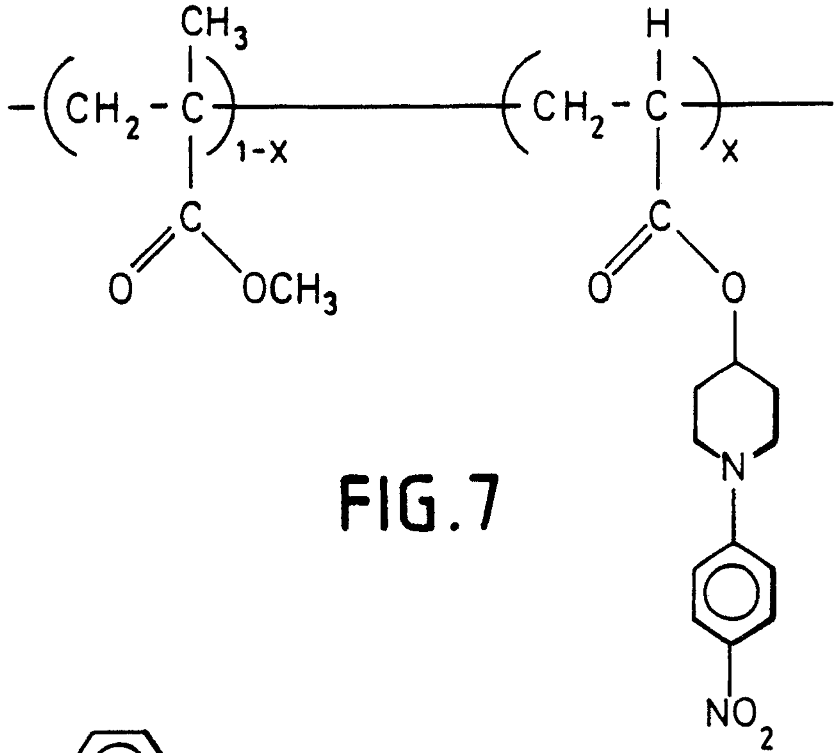

FIG.7

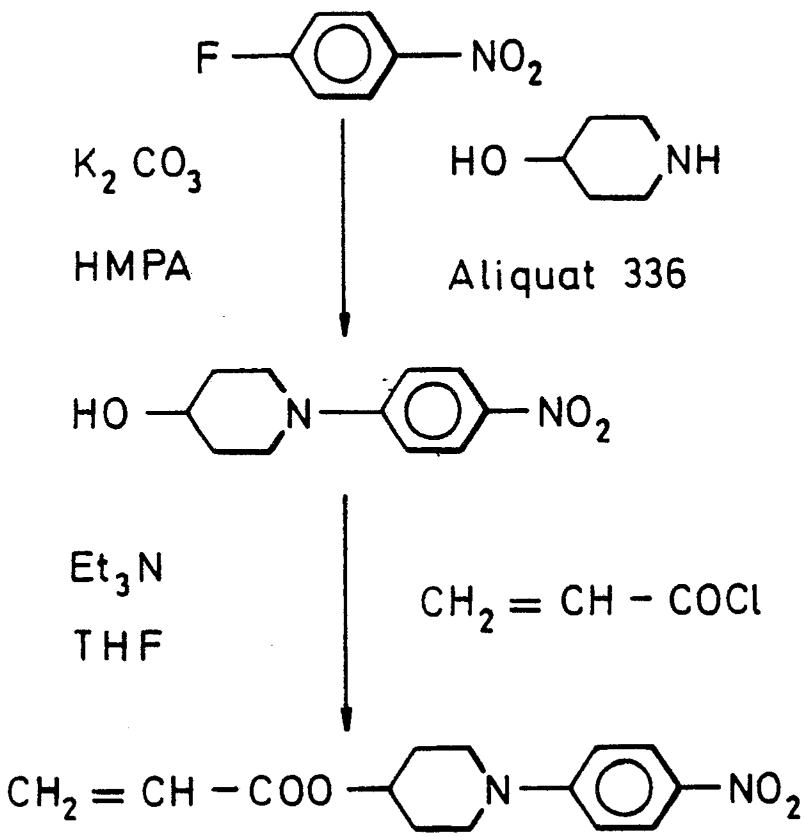


FIG.8

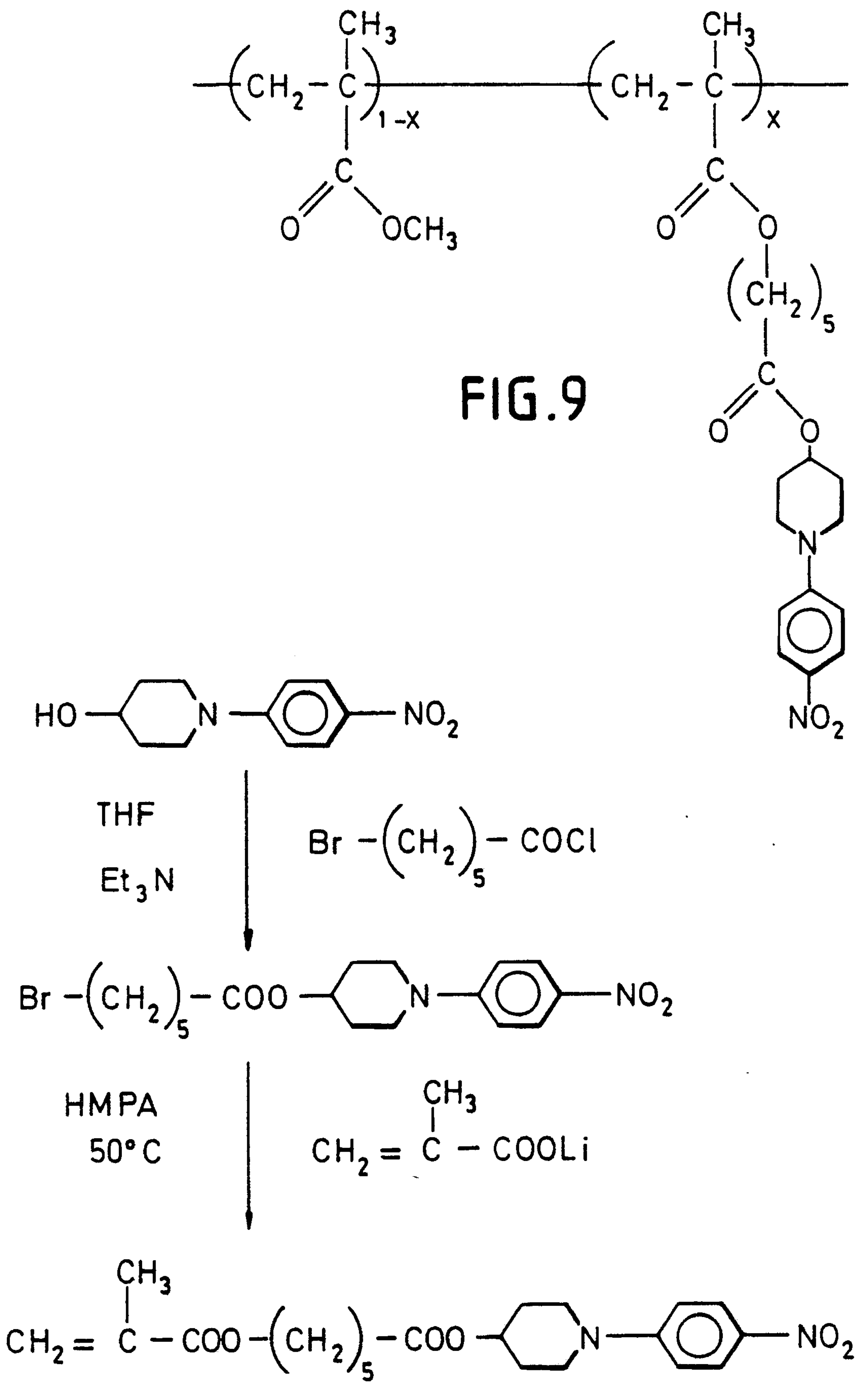


FIG.9

FIG.10

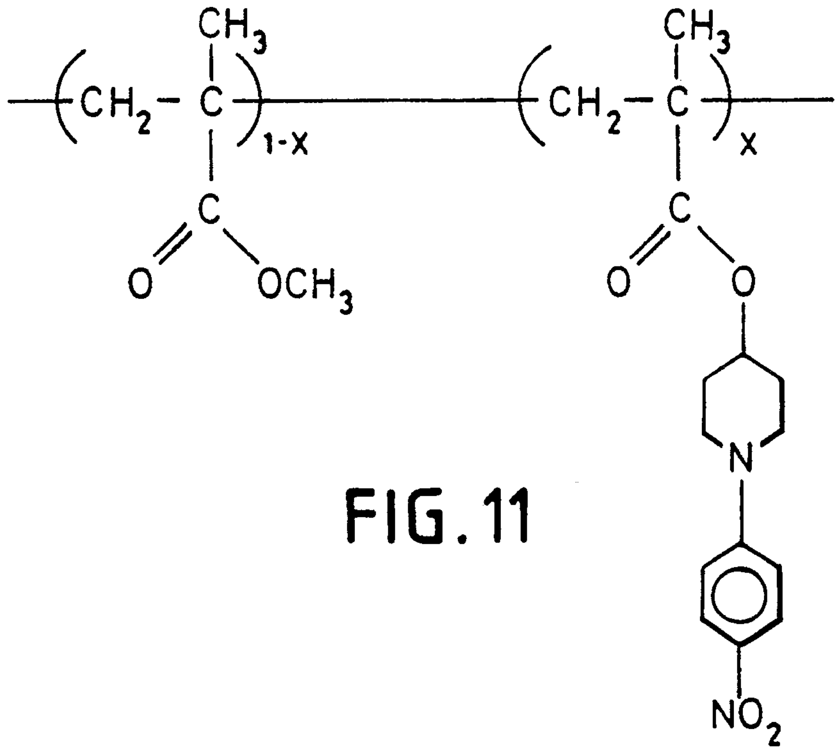

FIG. 11

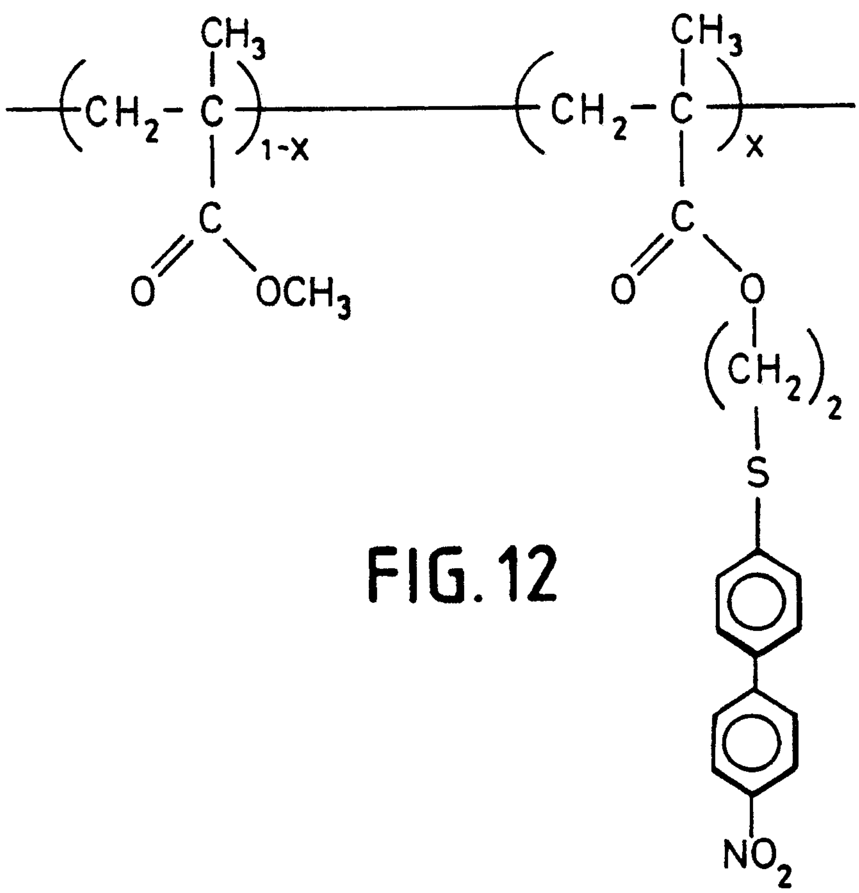

FIG. 12

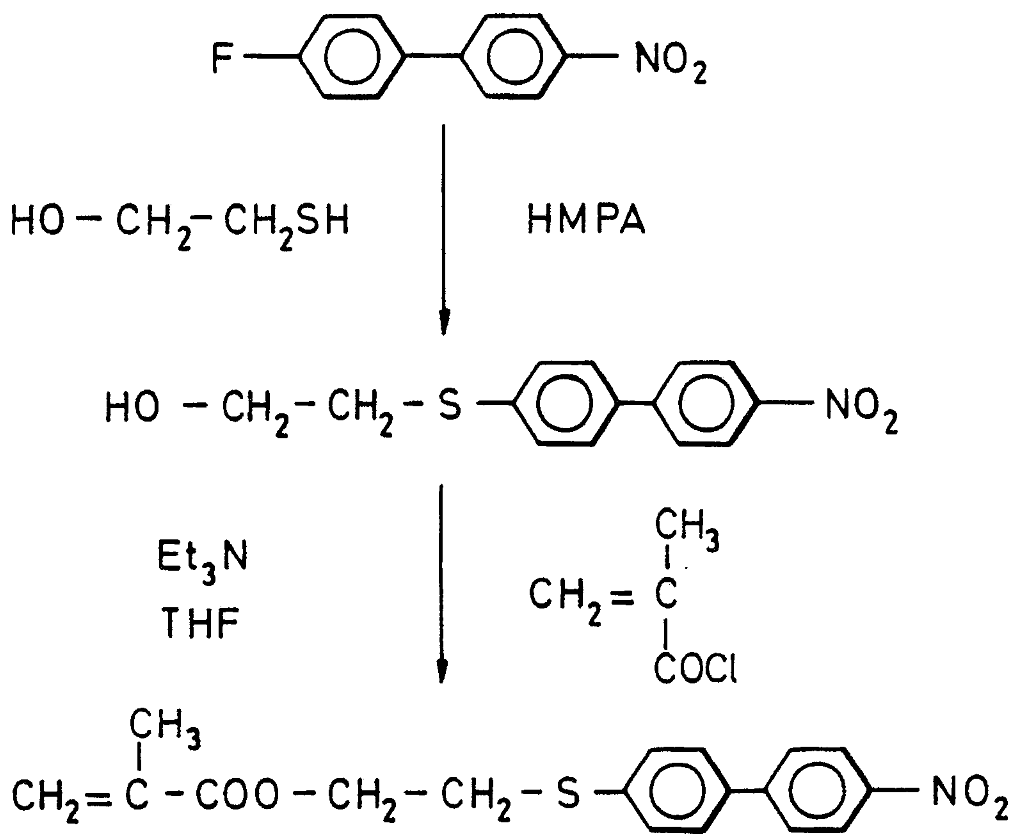


FIG. 13

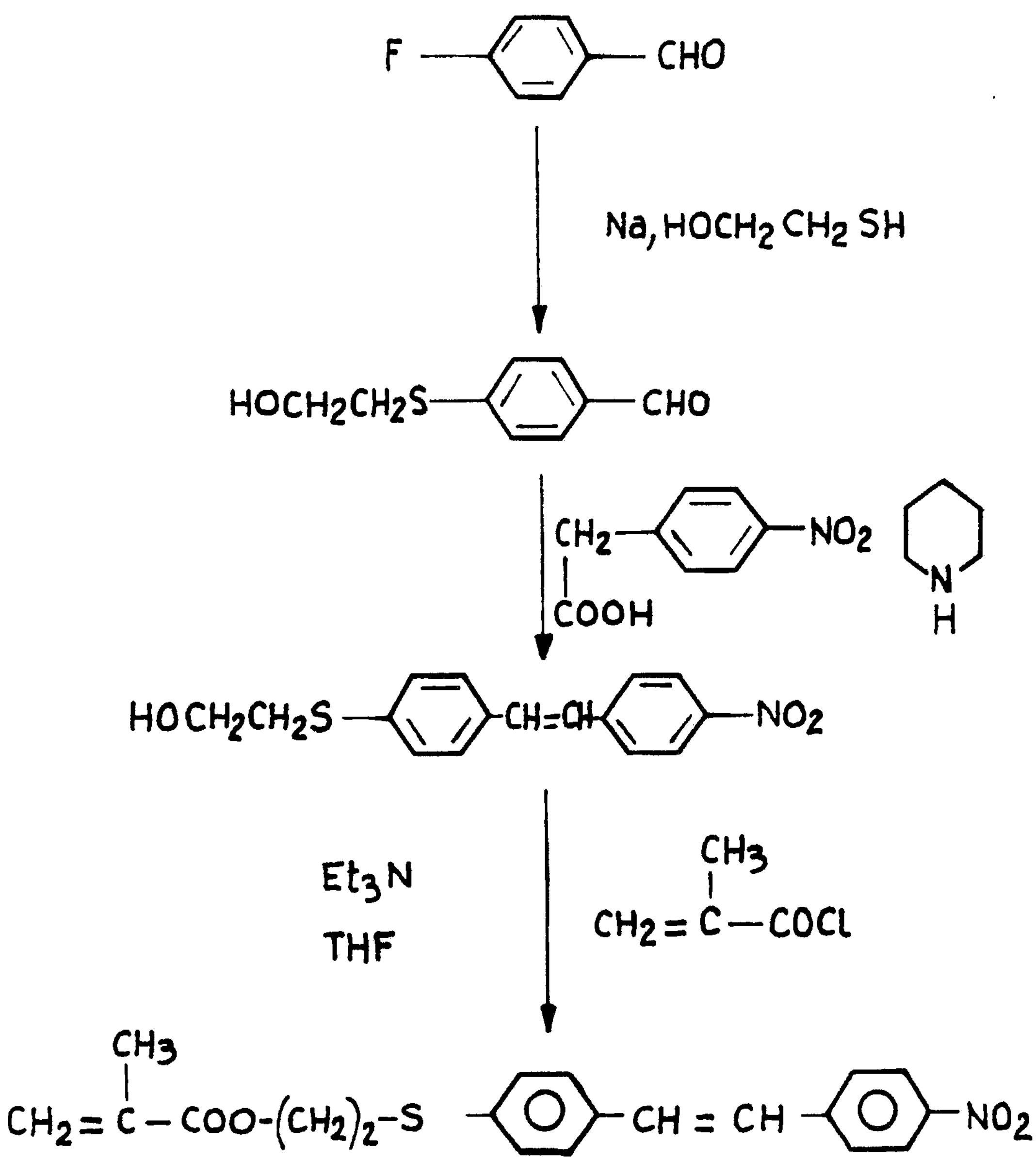


FIG_14

Office européen des brevets

# RAPPORT DE RECHERCHE EUROPEENNE

Numero de la demande

EP 90 40 2312

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 230 898 (CELANESE CORP.)<br>* Exemple 1; revendication *<br>--- | 1 | C 08 F 220/34<br>C 09 K 19/38 |
| X | GB-A-1 197 806 (BASF AG)<br>* Exemple 6; revendication 1 *<br>--- | 1 | |
| A | US-A-4 801 670 (R.N. DeMARTINO et al.)<br>* Exemple 1; revendication 1 *<br>----- | 1-8 | |
| | | | **DOMAINES TECHNIQUES RECHERCHES (Int. Cl.5)** |
| | | | C 08 F<br>C 09 K |

Le présent rapport a été établi pour toutes les revendications

| Lieu de la recherche | Date d'achèvement de la recherche | Examinateur |
|---|---|---|
| LA HAYE | 19-09-1990 | GLIKMAN J-F.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant